(19) Europäisches Patentamt
European Patent Office
Office européen des brevets

(11) **EP 4 779 474 A1**

(12) **EUROPEAN PATENT APPLICATION**
published in accordance with Art. 153(4) EPC

(43) Date of publication:
**22.07.2026 Bulletin 2026/30**

(21) Application number: **24945423.2**

(22) Date of filing: **27.12.2024**

(51) International Patent Classification (IPC):
*G06F 9/54* *(2006.01)*

(86) International application number:
**PCT/CN2024/143387**

(87) International publication number:
**WO 2025/260699 (26.12.2025 Gazette 2025/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2024 CN 202410808050**

(71) Applicant: **HUAWEI TECHNOLOGIES CO., LTD.**
**Shenzhen 518129 (CN)**

(72) Inventor: **WANG, Huajian**
**Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **CROSS-DEVICE DATA SYNCHRONIZATION METHOD AND APPARATUS**

(57) This application provides a cross-device data synchronization method and an apparatus, to increase a success rate of cross-device copying and pasting. The method includes: A first apparatus sends a first broadcast message, where the first broadcast message indicates to synchronize first data, the first broadcast message includes first relative time, and the first relative time indicates time at which the first apparatus obtains the first data through copying; and after receiving the first broadcast message, the second apparatus synchronizes the first data from the first apparatus based on the first relative time.

```
┌──────────┐                              ┌──────────┐
│  First   │                              │  Second  │
│apparatus │                              │apparatus │
└────┬─────┘                              └────┬─────┘
     │                                         │
┌ ─ ─┴─ ─ ─ ─ ─ ─ ─ ─ ─ ─ ─ ┐                 │
 S401: Obtain first data in response           │
│ to a copy operation, and store the │          │
  first data in a first clipboard              │
└ ─ ─┬─ ─ ─ ─ ─ ─ ─ ─ ─ ─ ─ ┘                 │
┌ ─ ─┴─ ─ ─ ─ ─ ─ ─ ─ ─ ─ ─ ┐                 │
 S402: Determine first absolute time           │
│ at which the first data is obtained │          │
 through copying, and determine first          │
│ relative time based on the first    │          │
  absolute time                                │
└ ─ ─┬─ ─ ─ ─ ─ ─ ─ ─ ─ ─ ─ ┘                 │
     │   S403: Send a first broadcast message   │
     │ ────────────────────────────────────────▶│
     │                              ┌────────────┴────────────┐
     │                              │ S404: Synchronize the   │
     │                              │ first data from the     │
     │                              │ first apparatus based on│
     │                              │ the first relative time │
     │                              └────────────┬────────────┘
     │                                           │
```

FIG. 4

**Description**

CROSS-REFERENCE TO RELATED APPLICATIONS

This application claims priority to Chinese Patent Application No. 202410808050.6, filed with the China National Intellectual Property Administration on June 20, 2024, and entitled "CROSS-DEVICE DATA SYNCHRONIZATION METHOD AND APPARATUS", which is incorporated herein by reference in its entirety.

TECHNICAL FIELD

This application relates to the field of communication technologies, and in particular, to a cross-device data synchronization method and an apparatus.

BACKGROUND

A clipboard (clipboard) is an area in a memory of a computer, used for temporarily storing to-be-exchanged information. Different applications (applications, APPs) can share information through the clipboard. For example, a user temporarily stores data of an app 1 in the clipboard through a copy operation, and then sends the data of the app 1 in the clipboard to an app 2 through a paste operation, thereby completing information sharing.

In a cross-device copying and pasting scenario, after copying data, a copy end may broadcast copy information to implement data synchronization. At present, to determine whether the current copy event is a most recent copy event, the copy information broadcast by the copy end includes information such as copy time and a copy sequence number used for indexing data, resulting in lengthy content of the broadcast copy information. Consequently, a probability that a receive end successfully receives all of the copy information is low, leading to a low success rate of cross-device copying and pasting.

SUMMARY

This application provides a cross-device data synchronization method and an apparatus, to increase a success rate of cross-device copying and pasting.

According to a first aspect, a cross-device data synchronization method is provided, where the method may be performed by a system including a first apparatus and a second apparatus. The method includes: The first apparatus sends a first broadcast message, where the first broadcast message indicates to synchronize first data, the first broadcast message includes first relative time, and the first relative time indicates time at which the first apparatus obtains the first data through copying; and after receiving the first broadcast message, the second apparatus synchronizes the first data from the first apparatus based on the first relative time.

The first apparatus and the second apparatus may be terminal apparatuses. The terminal apparatus is, for example, an electronic device, or another device including a function of the electronic device, or a chip system (or a chip), or another functional module. The chip system or the functional module can implement a function of the electronic device. The chip system or the functional module is, for example, disposed in the electronic device. The electronic device may be an electronic device with HarmonyOS (Harmony operating system, HarmonyOS) or an electronic device with another operating system such as Android (Android). In the following descriptions, an example in which the terminal apparatus is an electronic device is used.

In this embodiment of this application, the first relative time carried in the first broadcast message may indicate the time at which the first apparatus copies the first data and also serve as a copy sequence number for indexing the first data, thereby reducing a length of content included in the first broadcast message. This helps increase a probability that the second apparatus successfully synchronizes the first data.

In a possible implementation, before the first apparatus sends the first broadcast message, the method further includes: The first apparatus determines the first relative time based on first absolute time, where the first absolute time is time at which the first apparatus obtains the first data through copying, and a quantity of bytes occupied by the first relative time is less than a quantity of bytes occupied by the first absolute time. The absolute time is replaced with the relative time, thereby reducing the quantity of bytes occupied by the time in the first broadcast message and further reducing the length of the content included in the first broadcast message. This helps increase the probability that the second apparatus successfully synchronizes the first data.

In a possible implementation, that the first apparatus determines the first relative time based on the first absolute time includes: The first apparatus determines a second parameter and a first remainder based on the first absolute time and a first parameter, where the first parameter indicates an expected error; and if the first remainder is less than a first threshold, the first apparatus determines the first relative time based on the second parameter, where the first threshold is related to the first parameter; or if the first remainder is greater than or equal to the first threshold, the first apparatus updates the second parameter, and determines the first relative time based on the updated second parameter. For example, the expected error is 100, and the first threshold is 50. When the first remainder is greater than or equal to 50 ms, the first remainder is treated as 100 ms; or when the first remainder is less than 50 ms, the first remainder is treated as 0. In this case, a maximum error between the first absolute time and the first relative time is 50 ms. In other words, in a process in which the first apparatus processes the first absolute time to obtain the first relative time, time accuracy may be degraded by a maximum of 50 ms, which falls within a range of the expected error.

In a possible implementation, the method further includes: The second apparatus determines, based on the first relative time and second absolute time, whether the first data is most recently copied data; or the second apparatus determines, based on the second absolute time, whether the first data is the most recently copied data, where the second absolute time is time at which the second apparatus receives the first broadcast message; and if the first data is the most recently copied data, the second apparatus determines to synchronize the first data. Considering that transmission time of the broadcast message is short, the second apparatus may use the time at which the broadcast message is received as the time at which the first apparatus obtains the first data through copying. This improves efficiency of cross-device copying and pasting while ensuring a success rate of cross-device copying and pasting. In addition, an error between time at which the first apparatus actually obtains the first data through copying and the time at which the first apparatus obtains the first data through copying and that is determined by the second apparatus based on the time at which the first broadcast message is received and the time included in the first broadcast message may be restricted within a specific range. This can ensure accuracy of cross-device copying and pasting while reducing a length of content included in the broadcast message.

In a possible implementation, that the second apparatus determines, based on the first relative time and the second absolute time, whether the first data is the most recently copied data includes: The second apparatus determines second relative time based on the second absolute time; the second apparatus determines third absolute time based on the first relative time, the second relative time, and the second absolute time, where the third absolute time is time at which the first apparatus copies the first data and that is determined by the second apparatus; and the second apparatus determines, based on the third absolute time, whether the first data is the most recently copied data.

In a possible implementation, synchronizing the first data from the first apparatus based on the first relative time includes: when a historical paste probability of the second apparatus is greater than or equal to a second threshold, obtaining the first data from a first clipboard of the first apparatus based on the first relative time, and storing the first data in a second clipboard of the second apparatus, where the second threshold indicates a minimum paste requirement. The paste requirement is determined based on the historical paste probability. When the paste requirement is high, the first data is pre-synchronized. This helps improve paste efficiency of the second apparatus.

In a possible implementation, synchronizing the first data from the first apparatus based on the first relative time includes: when the historical paste probability of the second apparatus is less than the second threshold and in response to a data paste operation, obtaining the first data from the first clipboard of the first apparatus based on the first relative time, and storing the first data in the second clipboard of the second apparatus. When the paste requirement is low, the data may be synchronized upon detection of a paste operation. This can reduce a probability that the synchronized data is not pasted.

In a possible implementation, a broadcast frame length of the first broadcast message is related to a version number of the first data stored in the first clipboard of the first apparatus. Multi-version compatibility processing is performed based on the length of the content included in the broadcast message, making it possible for the broadcast message not to carry the version number of the first data stored in the first clipboard and further reducing a length of the broadcast message. This helps increase a success rate of cross-device data synchronization.

According to a second aspect, a cross-device data synchronization method is provided, where the method may be performed by a first apparatus in a system including the first apparatus and a second apparatus. The first apparatus and the second apparatus may be terminal apparatuses. The terminal apparatus is, for example, an electronic device, or another device including a function of the electronic device, or a chip system (or a chip), or another functional module. The chip system or the functional module can implement a function of the electronic device. The chip system or the functional module is, for example, disposed in the electronic device. In the following descriptions, an example in which the terminal apparatus is an electronic device is used. The method includes: sending a first broadcast message, where the first broadcast message indicates to synchronize first data, and the first broadcast message includes first relative time.

In a possible implementation, before sending the first broadcast message, the method further includes: determining the first relative time based on first absolute time, where the first absolute time is time at which the first apparatus copies the first data, and a quantity of bytes occupied by the first relative time is less than a quantity of bytes occupied by the first absolute time.

In a possible implementation, determining the first relative time based on the first absolute time includes: determining a second parameter and a first remainder based on the first absolute time and a first parameter, where the first parameter indicates an expected error; and if the first remainder is less than a first threshold, the first apparatus determines the first relative time based on the second parameter, where the first threshold is related to the first parameter; or if the first remainder is greater than or equal to the first threshold, updating the second parameter, and determining the first relative time based on the updated second parameter.

In a possible implementation, a broadcast frame length of the first broadcast message is related to a version number of the first data stored in a first clipboard.

According to a third aspect, a cross-device data synchronization method is provided, where the method may be performed by a second apparatus in a system including a first apparatus and the second apparatus. The first apparatus and the second apparatus may be terminal apparatuses. The terminal apparatus is, for example, an electronic device, or another device including a function of the electronic device, or a chip system (or a chip), or another functional module. The chip system or the functional module can implement a function of the electronic device. The chip system or the functional module is, for example, disposed in the electronic device. In the following descriptions, an example in which the terminal apparatus is an electronic device is used. The method includes: receiving a first broadcast message, where the first broadcast message indicates to synchronize first data, and the first broadcast message includes first relative time; and synchronizing the first data from the first apparatus based on the first relative time.

In a possible implementation, synchronizing the first data from the first apparatus based on the first relative time includes: when a historical paste probability of the second apparatus is greater than or equal to a second threshold, obtaining the first data from a first clipboard of the first apparatus based on the first relative time, and storing the first data in a second clipboard of the second apparatus, where the second threshold indicates a minimum paste requirement.

In a possible implementation, synchronizing the first data from the first apparatus based on the first relative time includes: when the historical paste probability of the second apparatus is less than the second threshold and in response to a data paste operation, obtaining the first data from the first clipboard of the first apparatus based on the first relative time, and storing the first data in the second clipboard of the second apparatus.

In a possible implementation, the method further includes: determining, based on the first relative time and second absolute time, whether the first data is most recently copied data; or determining, based on the second absolute time, whether the first data is the most recently copied data, where the second absolute time is time at which the second apparatus receives the first broadcast message; and if the first data is the most recently copied data, determining to synchronize the first data.

In a possible implementation, determining, based on the first relative time and the second absolute time, whether the first data is the most recently copied data includes: determining second relative time based on the second absolute time; determining third absolute time based on the first relative time, the second relative time, and the second absolute time, where the third absolute time is time at which the first apparatus copies the first data and that is determined by the second apparatus; and determining, based on the third absolute time, whether the first data is the most recently copied data.

According to a fourth aspect, a communication apparatus is provided. The communication apparatus may be an electronic device, or a chip or a chip system used in the electronic device. The communication apparatus includes a communication interface and a processor, and optionally, further includes a storage. The storage is configured to store a computer program. The processor is coupled to the storage and the communication interface. When the processor reads the computer program or instructions, the communication apparatus is enabled to perform the method performed by the first apparatus in the second aspect, or the communication apparatus is enabled to perform the method performed by the second apparatus in the third aspect.

According to a fifth aspect, a computer-readable storage medium is provided. The computer-readable storage medium is configured to store a computer program. When the computer program is run on a computer, the computer is enabled to perform the method according to the second aspect or the third aspect.

According to a sixth aspect, a computer program product is provided, including a computer program. When the computer program is run on a computer, the computer is enabled to perform the method according to the second aspect or the third aspect.

According to a seventh aspect, a graphical user interface on an electronic device is provided. The electronic device has a display, a storage, and a processor. The processor is configured to execute one or more computer programs stored in the storage. The graphical user interface includes a graphical user interface displayed when the electronic device performs the method according to the second aspect or the third aspect.

According to an eighth aspect, a chip system is provided, including a processor and an interface. The processor is configured to invoke instructions through the interface and run the instructions, to enable the chip system to implement the method according to the second aspect or the third aspect.

For beneficial effects of the second aspect to the eighth aspect, refer to the beneficial effects of the first aspect. Details are not described again.

BRIEF DESCRIPTION OF DRAWINGS

FIG. 1A is a diagram of a hardware structure of an electronic device according to an embodiment of this application;

FIG. 1B is a diagram of a software structure of an electronic device according to an embodiment of this application;

FIG. 1C is a diagram of another software structure of an electronic device according to an embodiment of this application;

FIG. 2 is a diagram of an application scenario according to an embodiment of this application;

FIG. 3 is a flowchart of copying and pasting data across devices;

FIG. 4 is a schematic flowchart of a cross-device data synchronization method according to an embodiment of this application;

FIG. 5 is a schematic flowchart of another cross-device data synchronization method according to an embodiment of this application; and

FIG. 6 is a diagram of a structure of an electronic device according to an embodiment of this application.

## DESCRIPTION OF EMBODIMENTS

The following clearly describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

The following describes some terms in embodiments of this application, to facilitate understanding of a person skilled in the art.

An application (application, APP) in embodiments of this application is a software program that can implement one or more particular functions. Usually, a plurality of applications may be installed on a terminal, for example, a camera application, a gallery application, a messaging application, an MMS application, and various email applications. The application mentioned in the following may be an application installed before delivery of the terminal, or may be an application downloaded from a network or obtained from another terminal by a user during use of the terminal.

A uniform resource identifier (uniform resource identifier, URI) in embodiments of this application indicates a storage location of a picture, a file, or the like.

A clipboard in embodiments of this application is an area in a memory of a computer, used for temporarily storing data. The data may include, for example, copied data, cut data, or to-be-pasted data. The clipboard can hold only one piece of data. When new data is stored in the clipboard, data previously stored in the clipboard may be removed. Data stored in the clipboard is related to copied content. For example, if the copied content is text data, the text data may be directly stored in the clipboard; or if the copied content is a media file such as a picture or a video, a URI of the media file may be stored in the clipboard because the media file cannot be directly stored in the clipboard. For example, the clipboard may be a key-value (key-value, KV) store (store) database, and may store keys (keys) and data (data).

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

The following describes an electronic device, a graphical user interface (graphical user interface, GUI) used for such an electronic device, and embodiments for using such an electronic device. In some embodiments of this application, the electronic device may be an electronic device such as a mobile phone, a tablet computer, a wearable device (smartwatch), an extended reality (extended reality, XR) device, a vehicle-mounted device (head unit), or customer premises equipment (customer premises equipment, CPE). A specific type of the electronic device is not limited in embodiments of this application.

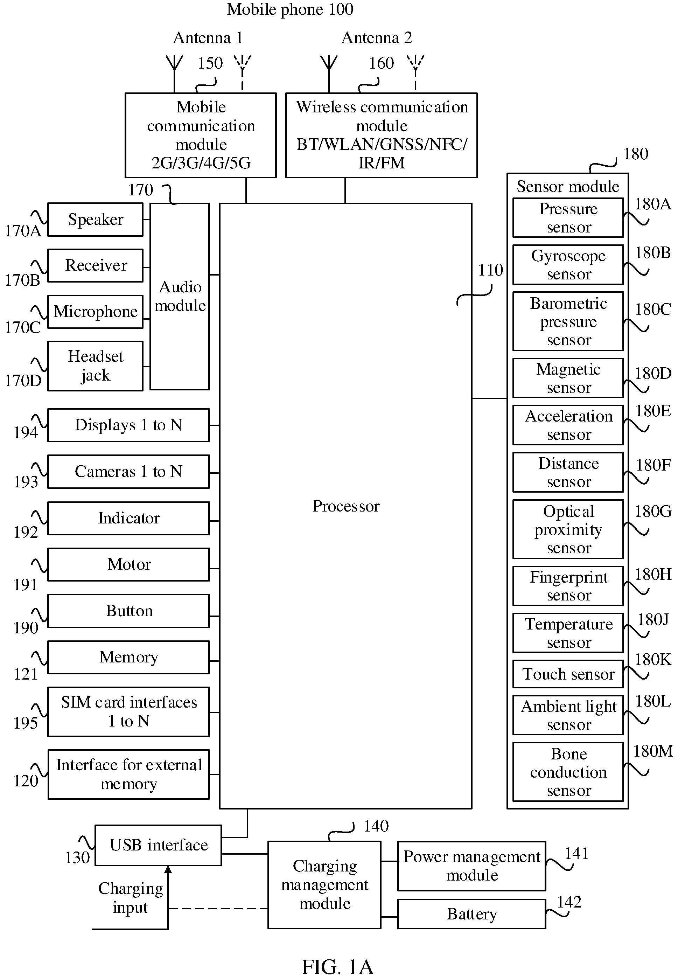

FIG. 1A is a diagram of a structure of an electronic device according to an embodiment of this application.

The electronic device may include a processor 110, an interface 120 for external memory, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, cameras 193, displays 194, subscriber identity module (subscriber identity module, SIM) card interfaces 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent components, or may be integrated into one or more processors.

A storage may be further disposed in the processor 110, and is configured to store instructions and data. In some embodiments, the storage in the processor 110 is a cache memory. The storage may store instructions or data just used or cyclically used by the processor 110. If the processor 110 needs to use the instructions or the data again, the processor may directly invoke the instructions or the data from the storage. This avoids repeated access, reduces waiting time of the processor 110, and improves system efficiency.

The memory 121 may be configured to store computer-executable program code. The executable program code includes instructions. The processor 110 runs the instructions stored in the memory 121, to perform various function applications and data processing of the electronic device. The memory 121 may include a program storage area and a data storage area. An operating system, software code of at least one application (for example, a camera application or a messaging application), and the like may be stored in the program storage area. Data (for example, an image or a video) generated during use of the electronic device, and the like may be stored in the data storage area. In addition, the memory 121 may include a high-speed random access memory, or may include a nonvolatile memory, for example, at least one magnetic disk storage device, a flash memory, or a universal flash storage (universal flash storage, UFS).

The memory 121 may further store software code of the cross-device data synchronization method provided in embodiments of this application. When the processor 110 runs the software code, steps of a procedure of the cross-device data synchronization method are performed, to implement a cross-device data synchronization process.

The memory 121 may further store data copied by the electronic device or synchronized from another electronic device, or the like. The data may include, for example, a picture or a file.

The interface 120 for external memory may be configured to connect to an external memory card, such as a micro-SD card, to extend a storage capability of the electronic device. The external memory card communicates with the processor 110 through the interface 120 for external memory, to implement a data storage function.

Certainly, the software code of the cross-device data synchronization method provided in embodiments of this application may alternatively be stored in an external memory. The processor 110 may run the software code through the interface 120 for external memory, to perform the steps of the procedure of the cross-device data synchronization method and implement the cross-device data synchronization process. An image, a video, and the like that are shot by the electronic device may also be stored in the external memory.

It should be understood that a user may specify whether to store an image in the memory 121 or the external memory. For example, when the electronic device is currently connected to the external memory, if the electronic device shoots an image, prompt information may be displayed to inform the user whether to store the image in the external memory or the memory 121. Certainly, there is another specifying manner, and this is not limited in this embodiment of this application. Alternatively, when detecting that a memory capacity of the memory 121 is less than a preset capacity, the electronic device may automatically store an image in the external memory.

It may be understood that the structure shown in this embodiment of this application does not constitute a specific limitation on the electronic device. In some other embodiments of this application, the electronic device may include more or fewer components than those shown in the figure, or some components may be combined, or some components may be split, or there may be a different component arrangement. The components shown in the figure may be implemented by hardware, software, or a combination of software and hardware.

In some embodiments, a software system of the electronic device may use a layered architecture, an event-driven architecture, a microkernel architecture, a microservice architecture, or a cloud architecture. In the following embodiments, an Android (Android) system with a layered architecture is used as an example to describe a software structure of the electronic device.

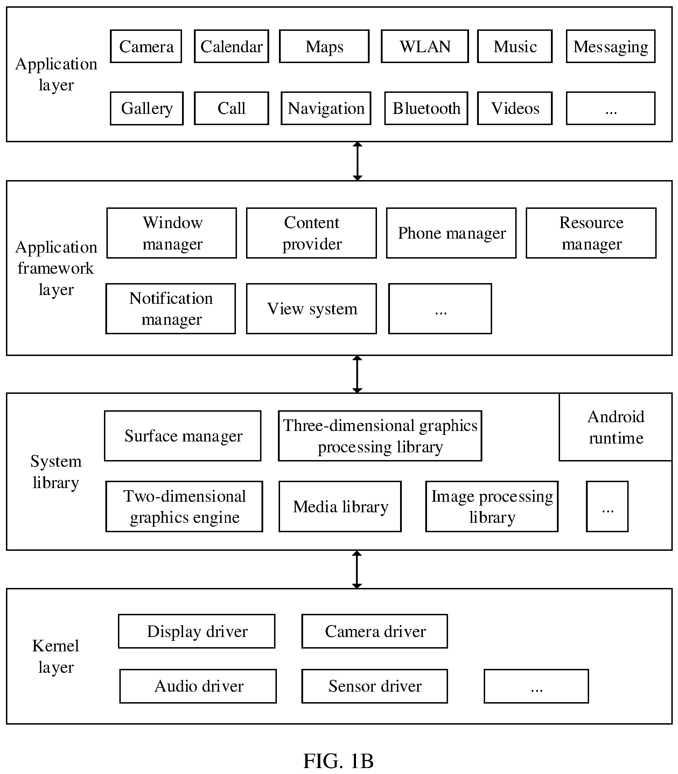

FIG. 1B is a block diagram of a software structure of an electronic device according to an embodiment of this application. In the layered architecture, software is divided into several layers, and each layer has a clear role and task. The layers communicate with each other through a software interface.

In some embodiments, the Android system is divided into four layers: an application layer, an application framework layer, Android runtime (Android runtime) and system library, and a kernel layer from top to bottom. The application layer may include a series of application packages. As shown in FIG. 1B, the application packages may include applications such as Camera, Gallery, Calendar, Call, Maps, Navigation, Wireless Local Area Network (wireless local area network, WLAN), Bluetooth, Music, Videos, and Messaging.

The application framework layer provides an application programming interface (application programming interface, API) and a programming framework for an application at the application layer. The application framework layer includes some predefined functions. As shown in FIG. 1B, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image (image), an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the mobile phone 100, for example, management of a call status (including answering, declining, or the like).

The resource manager provides various resources such as a localized character string, an icon, an image, a layout file, and a video file for an application. The notification manager enables an application to display notification information in a status bar, to convey a notification message. The notification information may automatically disappear after a short pause without requiring a user interaction. For example, the notification manager is configured to notify download completion, provide a message notification, and the like.

The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert tone is made, the electronic device vibrates, or an indicator blinks.

The Android runtime includes a core library and a virtual machine. The Android runtime is responsible for scheduling and management of the Android system. The core library includes two parts: a function that needs to be called in Java language and a core library of Android. The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

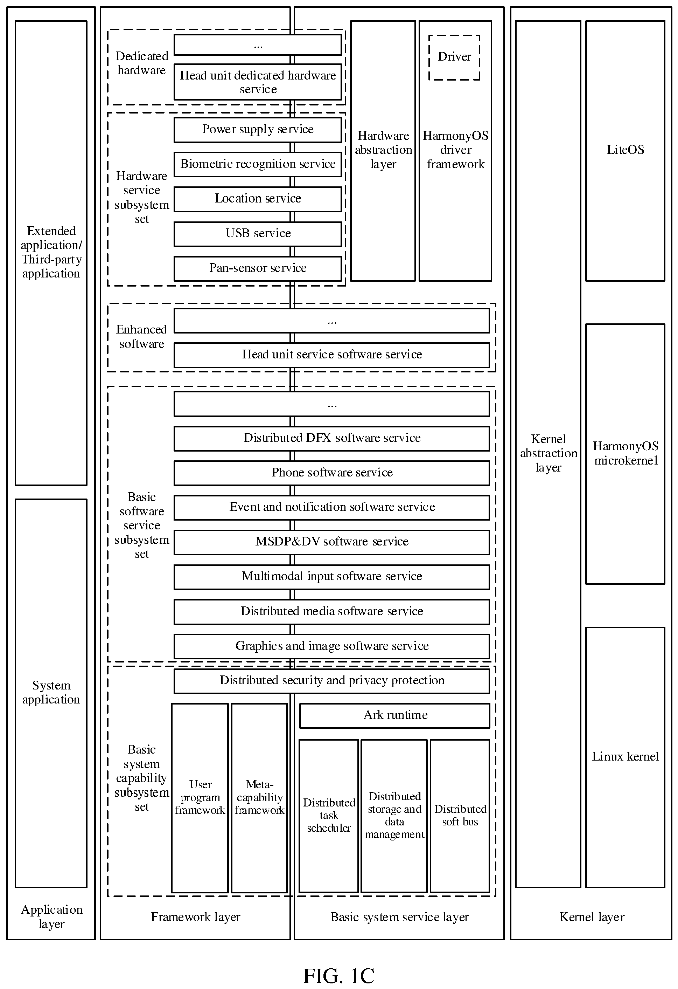

FIG. 1C is a block diagram of another software structure of an electronic device according to an embodiment of this application. In some embodiments, Harmony includes four layers: a kernel layer, a basic system service layer, a framework layer, and an application layer from bottom to top.

The Harmony system adopts a multi-kernel design, and optionally includes a Linux kernel, a Harmony microkernel, and a Lite operating system (Lite operating system, LiteOS). Through this design, appropriate system kernels can be selected for devices with different device capabilities. The kernel layer further includes a kernel abstraction layer (kernel abstraction layer, KAL) that provides basic kernel capabilities for another Harmony layer, such as process management, thread management, memory management, file system management, network management, and peripheral management.

The basic system service layer is a core capability set of the Harmony system, and supports the Harmony system in providing a service for an application service through the framework layer in a multi-device deployment scenario. This layer optionally includes the following parts:

Basic system capability subsystem set: provides a basic capability for an operation such as running, scheduling, or migration of a distributed application on a plurality of devices provided with Harmony systems, and includes distributed soft bus, distributed data management and file management, distributed task scheduler, Ark runtime, distributed security and privacy protection, and the like. The Ark runtime provides multi-language runtime and basic system class libraries in C, C++, JavaScript, and the like, and also provides runtime for a Java program (namely, a part developed in a Java language in an application or at the framework layer) that is staticized via an Ark compiler. Code of the method for recording a call path in embodiments of this application may be implemented in the Ark runtime.

Basic software service subsystem set: provides the Harmony system with a common and universal software service, and includes subsystems such as graphics and image, distributed media, distributed artificial intelligence (artificial intelligence, AI), multimodal input, mobile sensing development platform (mobile sensing development platform, MSDP) & device virtualization (device virtualization, DV), event and notification, phone service, and distributed DFX. The basic software service subsystem set can be tailored based on deployment environments of different device forms. Each subsystem can be tailored at a granularity of a function.

Enhanced software service subsystem set: provides the Harmony system with differentiated capability-enhanced software services for different devices, and includes subsystems such as tablet service software, smart screen service software, head unit service software, and internet of things (internet of things, IoT) service software. The enhanced software service subsystem set can be tailored at a granularity of a subsystem based on deployment environments of different device forms. Each subsystem can also be tailored at a granularity of a function.

HarmonyOS driver framework (HDF) and hardware abstraction layer (HAL): lay a foundation for an open hardware ecosystem of the Harmony system, provide hardware capability abstraction for hardware, and provide development frameworks and running environments for various peripheral drivers.

Hardware service subsystem set: provides the Harmony system with a common and adaptive hardware service, and includes hardware service subsystems such as pan-sensor, location, power supply, USB, and biometric recognition. The hardware service subsystem set can be tailored based on deployment environments of different device forms. Each subsystem can be tailored at a granularity of a function.

Dedicated hardware service subsystem: provides the Harmony system with differentiated hardware services for different devices, and optionally includes subsystems such as a tablet dedicated hardware service, a head unit dedicated hardware service, a wearable dedicated hardware service, and an IoT dedicated hardware service. The dedicated hardware service subsystem can be tailored at a granularity of a subsystem. Each subsystem can be tailored at a granularity of a function.

The framework layer provides applications in the Harmony system with multi-language user program frameworks and meta-capability frameworks in Java, C, C++, JavaScript, and the like, and multi-language framework APIs for external access to various software and hardware services. The application layer includes a system application and a third-party application, and may include applications such as Camera, Gallery, Calendar, Call, Maps, Navigation, WLAN, Bluetooth, Music, Videos, and Messaging. Applications in the Harmony system are constructed based on meta-services PA and FA.

For ease of understanding, in the following embodiments of this application, an electronic device having the structure shown in FIG. 1A, FIG. 1B, or FIG. 1C is used as an example to describe a cross-device copying and pasting method provided in embodiments of this application with reference to the accompanying drawings.

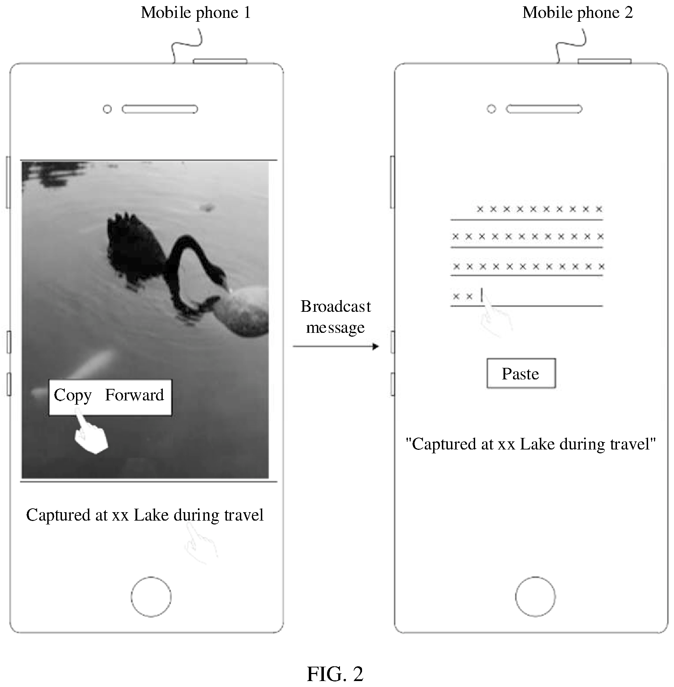

FIG. 2 is a diagram of an application scenario according to an embodiment of this application.

In the scenario shown in FIG. 2, a mobile phone 1 and a mobile phone 2 are in a collaboration mode. The mobile phone 1 and the mobile phone 2 work collaboratively through a wireless connection. For example, the mobile phone 1 and the mobile phone 2 may establish a communication connection through WLAN, Bluetooth, or the like, and the mobile phone 1 and the mobile phone 2 may communicate collaboration data with each other through the communication connection when working collaboratively. It may be understood that the scenario shown in FIG. 2 is merely an example. In actual application, the scenario may include more electronic devices. This is not limited in this embodiment of this application.

In FIG. 2, a display interface of the mobile phone 1 includes a picture and a line of text, and a user may perform copy operations on the picture and/or the text. For example, the user may touch and hold a position of the line of text, the mobile phone 1 may display a dialog box including options "Copy" and "Forward" upon detection of the touch-and-hold operation of the user, and the user may tap "Copy" in the displayed dialog box. Then, the user may paste the line of text on the mobile phone 2, to implement cross-device copying and pasting, namely, cross-device data synchronization. For example, the user may touch and hold a display interface of the mobile phone 2, and the mobile phone 2 may display a "Paste" dialog box and a dialog box for to-be-pasted content upon detection of the touch-and-hold operation of the user. If content displayed in the dialog box for to-be-pasted content is content that the user expects to paste, the user may tap "Paste", to implement cross-device data synchronization.

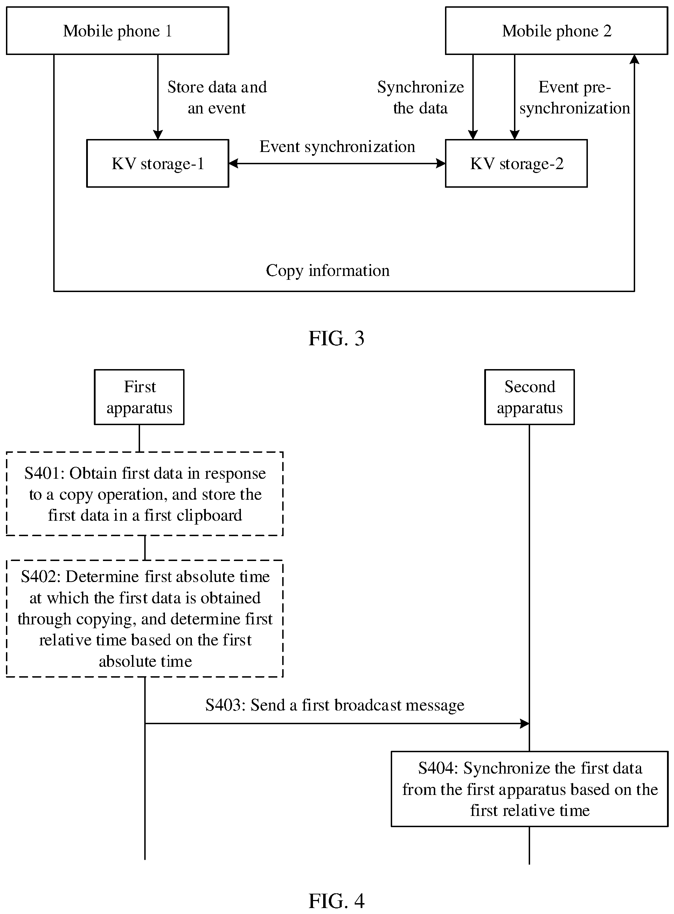

FIG. 3 is a flowchart of copying and pasting data across devices. As shown in FIG. 3, after copying data, a mobile phone 1 may store the copied data (data) and an event (event) in a KV storage-1 of the mobile phone 1, which triggers event synchronization, and may broadcast copy information. The copy information may include information, for example, absolute time at which the mobile phone 1 copies the data, data type information of the data (for example, description information indicating whether the data is small data), a version (version) number of the data stored in a clipboard of the mobile phone 1, a copy sequence number of the data, and a user identifier (identifier, ID), where the absolute time may also be understood as a timestamp. The copy sequence number is used to index the data. For example, the copy sequence number may be a key stored in the KV storage-1.

After receiving the broadcast message from the mobile phone 1, the mobile phone 2 may perform event pre-synchronization, and determine whether there is a need to synchronize the data copied by the mobile phone 1 to a KV storage-2. If the mobile phone 2 determines that there is a need to synchronize the data copied by the mobile phone 1 to the KV storage-2, the mobile phone 2 may obtain the data from the KV storage-1 based on the copy sequence number carried in the broadcast message, and synchronize the obtained data to the KV storage-2.

In this process, the event, the data, and the like need to be synchronized, resulting in many synchronization procedures. In addition, the copy information broadcast by the mobile phone 1 includes the absolute time, and the absolute time generally occupies 8 bytes (Bytes), resulting in lengthy content of the copy information. Consequently, the mobile phone 1 needs to split the content included in the copy information into a plurality of data packets for broadcasting, and the mobile phone 2 needs to successfully receive the plurality of data packets to complete data synchronization. Therefore, if the mobile phone 2 does not successfully receive a data packet among the plurality of data packets, the data may not be successfully synchronized, leading to paste failure and a low success rate of cross-device copying and pasting.

In view of this, an embodiment of this application provides a cross-device data synchronization method. In the method, first relative time information included in a first broadcast message may indicate time at which a first apparatus copies first data and also serve as an index for a second apparatus to obtain the first data from the first apparatus, thereby reducing a length of content included in the broadcast message. In addition, a quantity of bytes occupied by the first relative time information is less than a quantity of bytes occupied by absolute time. This effectively increases a probability that cross-device data synchronization succeeds.

FIG. 4 is a flowchart of a cross-device data synchronization method according to an embodiment of this application. The method may be implemented by a first apparatus. The first apparatus may be, for example, the electronic device shown in FIG. 1A or the mobile phone 1 shown in FIG. 2.

S401: The first apparatus obtains first data in response to a copy operation, and store the first data in a first clipboard.

The copy operation may be used to copy text data and/or a media file such as an image or a video. The first data may be the copied text data, and/or the first data may be a URI of the copied media file. If the first data is the text data, after detecting the copy operation of a user, the first apparatus may transmit the first data from a copy app to the first clipboard, that is, store the first data in the first clipboard. If the first data is the URI of the media file, after detecting the copy operation of the user, the first apparatus may obtain description information (for example, a storage path) of the media file, generate the URI based on the storage path, and store the URI in the first clipboard.

S402: The first apparatus determines first absolute time at which the first data is obtained through copying, and determines first relative time based on the first absolute time.

As described above, absolute time generally occupies 8 bytes (namely, 64 bits), resulting in lengthy content of broadcast copy information and a low success rate of cross-device copying and pasting. Therefore, to increase a success rate of cross-device copying and pasting, the first apparatus may reduce a quantity of bytes occupied by time carried in the broadcast information. For example, the first apparatus may process the first absolute time to obtain the first relative time that occupies a smaller quantity of bytes. A process in which the first apparatus determines the first relative time (t_1) based on the first absolute time (T_1) is as follows.

S11: The first apparatus determines a second parameter based on T_1 and a first parameter.

The first parameter indicates a range of an expected error between the first absolute time and third absolute time in S403. The third absolute time is time at which the first apparatus obtains the first data through copying and that is determined by the second apparatus based on the first relative time. In the following embodiments, the time at which the first apparatus obtains the first data through copying may be briefly referred to as time at which the first apparatus copies the first data.

A minimum time unit of the second parameter is related to the first parameter. For example, the first parameter is 100, and the second parameter is a time parameter in units of 100 milliseconds. For example, $t\_100=T\_1/100$, where t_100 represents the second parameter.

Optionally, there may be a specific error between the first absolute time and the first relative time. Therefore, to ensure that the error between the first absolute time and the third absolute time that is restored by the second apparatus based on the first relative time falls within the foregoing range of the expected error, the first apparatus may further perform S12: The first apparatus determines a first remainder based on T_1 and the first parameter, and determines a value of the second parameter based on the first remainder.

For example, the first remainder (R) may be a remainder of T_1 with respect to the first parameter, that is, $R=T\_1\%X$, where X represents the first parameter. If the first remainder is greater than or equal to a first threshold, the first apparatus may determine that the value of the second parameter is t_100+1. If the first remainder is less than the first threshold, the first apparatus may determine that the value of the second parameter is t_100. The first threshold is related to the first parameter. The first threshold is, for example, an intermediate value of the first parameter. For example, the first parameter is 100, and the first threshold may be 50.

S13: The first apparatus determines t_1 based on the second parameter.

The first apparatus may determine that a part of bytes of the second parameter are t_1. For example, the first apparatus may obtain, based on the quantity of bytes occupied by the first relative time, information with the corresponding quantity of bytes from the second parameter, and use the obtained information as t_1. Optionally, the first apparatus may determine that last several bytes of the second parameter are t_1. For example, the first relative time occupies 2 bytes, and the first apparatus may determine that last 2 bytes of the second parameter (namely, last 16 bits of the second parameter) are t_1.

S403: The first apparatus sends a first broadcast message, and correspondingly, the second apparatus receives the first broadcast message.

The first broadcast message indicates to synchronize the first data, and the first broadcast message includes the first relative time. As described in S402, the first absolute time occupies 8 bytes, and the first relative time occupies 2 bytes. That is, the quantity of bytes occupied by the first relative time is less than the quantity of bytes occupied by the first absolute time. In this case, the first relative time is carried in the first broadcast message, thereby reducing a length of content included in the first broadcast message. This helps increase a probability that the second apparatus successfully synchronizes the first data.

Optionally, the first broadcast message may further include feature description information of the first data. The feature description information of the first data includes, for example, one or more of the following information: data type information of the first data, namely, description information indicating whether the first data is text data and description information indicating whether the first data is a URI; description information indicating whether the first data is carried in the first broadcast message; and the like.

For example, the first broadcast message includes 1 byte for describing data features, and 1 bit (bit) in the byte may identify one data feature. For example, a last bit in the byte may identify whether the data is text data, a second-to-last bit in the byte may identify whether the data is a URI, and a third-to-last bit in the byte may identify whether the first data is carried in the first broadcast message.

S404: The second apparatus synchronizes the first data from the first apparatus based on the first relative time.

The first relative time may identify a copy sequence number of the first data. In other words, the first relative time may further be used as the copy sequence number of the first data. As a result, the first apparatus may not include the copy sequence number of the first data in the first broadcast message, thereby reducing a length of the first broadcast message. This helps increase a success rate of cross-device data synchronization.

Optionally, S404 is performed under a condition that the second apparatus determines that there is a need to synchronize the first data. Therefore, before S404 is performed, the second apparatus may further determine whether there is a need to synchronize the first data. For example, the second apparatus may determine, based on the time at which the first apparatus copies the first data and time at which data already stored in a second clipboard of the second apparatus is copied, whether the first data is most recently copied data. If the first data is the most recently copied data, it indicates that the second apparatus may synchronize the first data; or if the first data is not the most recently copied data, it indicates that there is another more recent copy operation after the first data is copied, and the second apparatus may not synchronize the first data.

The second apparatus may determine the time at which the first apparatus copies the first data, in the following two manners:

Manner 1: Considering that transmission time of the broadcast message is short, the second apparatus may use time at which the first broadcast message is received (for example, second absolute time) as the time at which the first apparatus copies the first data, and determine, based on the second absolute time, whether the first data is the most recently copied data. For example, if the second absolute time is earlier than the time at which the data already stored in the second clipboard is copied, it indicates that there is another copy operation after the first apparatus copies the first data, that is, the first data is not the most recently copied data. The another copy operation may be, for example, a copy operation performed by the user on the second apparatus, or a copy operation performed by the user on another apparatus. This is not limited in this embodiment of this application. It may be understood that, when the another copy operation is the copy operation performed by the user on the another apparatus, it indicates that a network link between the first apparatus and the second apparatus may be faulty, and the second apparatus receives a broadcast message from the another apparatus first.

If the second absolute time is later than the time at which the data already stored in the second clipboard is copied, it indicates that there is not another copy operation after the first apparatus copies the first data, that is, the first data is the most recently copied data.

Manner 2: The second apparatus may alternatively determine, based on the first relative time and the time at which the first broadcast message is received (namely, the foregoing second absolute time), whether the first data is the most recently copied data. The first relative time is relative time obtained by processing the first absolute time. For example, the first relative time occupies 2 bytes. The first relative time is relative time with a value range of 0 to 65535 ($2^{16}-1$). In addition, a process in which the first apparatus determines the first relative time based on the first absolute time involves processes such as modulo and rounding. Consequently, the second apparatus cannot determine the first absolute time based on the first relative time, and thus cannot directly determine, based on the first relative time, whether the first data is the most recently copied data. Therefore, the second apparatus may determine, based on the second absolute time and the first relative time, the time at which the first apparatus copies the first data. The time at which the first apparatus copies the first data and that is determined by the second apparatus is, for example, the third absolute time. The second apparatus may determine, based on the third absolute time, whether the first data is the most recently copied data.

For example, the second apparatus may determine second relative time based on the second absolute time, and determine the third absolute time based on the first relative time, the second absolute time, and the second relative time. For a manner in which the second apparatus determines the second relative time based on the second absolute time, refer to the foregoing manner in which the first apparatus determines the first relative time based on the first absolute time. Details are not described herein again. It may be understood that a first parameter and a first threshold that are used when the second apparatus determines the second relative time based on the second absolute time are the same as the first parameter and the first threshold that are used when the first apparatus determines the first relative time based on the first absolute time. For example, the first parameter is 100 when the first apparatus determines the first relative time based on the first absolute time. In this case, the first parameter is also 100 when the second apparatus determines the second relative time based on the second absolute time.

For a manner in which the second apparatus determines the third absolute time ($T\_1^{\wedge'}$) based on the first relative time ($t\_1$), the second absolute time ($T\_2$), and the second relative time ($t\_2$), refer to, for example, Formula 1:

$$T\_1^{\wedge'}=T\_2-t\_2*X+t\_1*X \qquad \text{(Formula 1)}$$

X represents the first parameter.

Optionally, if the first relative time is close to an end of a time interval (for example, a first time interval), for example, the first relative time occupies 2 bytes and the first relative time is close to 65535, a value of the second relative time may be close to a start of a next time interval (for example, a second time interval) adjacent to the first time interval, that is, the second relative time is close to 0, and $t\_2$ is less than $t\_1$. In this case, for a manner in which the second apparatus determines the third absolute time ($T\_1^{\wedge'}$) based on the first relative time ($t\_1$), the second absolute time ($T\_2$), and the second relative time ($t\_2$), refer to, for example, Formula 2:

$$T\_1^{\wedge'}=T\_2-(t\_2+Y)*X+t\_1*X \qquad \text{(Formula 2)}$$

X represents the first parameter. Y represents a maximum value of the first relative time, and a maximum value of Y is related to the quantity of bytes occupied by the first relative time. For example, if the first relative time occupies 2 bytes, Y is 65535; or if the first relative time occupies 1 byte, Y is 255 ($2^{\wedge}8$-1).

In the foregoing embodiment, for example, X is 100, and the first threshold is 50. When the first remainder is greater than or equal to 50 ms, the first remainder is treated as 100 ms; or when the first remainder is less than 50 m, the first remainder is treated as 0. In this case, a maximum error between the first absolute time and the first relative time is 50 ms. In other words, in a process in which the first apparatus processes the first absolute time to obtain the first relative time, time accuracy may be degraded by a maximum of 50 ms. Likewise, a maximum error between the second absolute time and the second relative time described in the following is 50 ms. In other words, in a process in which the second apparatus processes the second absolute time to obtain the second relative time, time accuracy may also be degraded by a maximum of 50 ms. As a result, during entire time processing, time accuracy may be degraded by a maximum of 100 ms, thereby ensuring that an error between the first absolute time and the third absolute time is within 100 ms.

Optionally, after determining that there is a need to synchronize the first data, the second apparatus may further determine whether there is a need to pre-synchronize the first data, that is, whether there is a need to synchronize the first data in the second clipboard in advance. For example, when the first data is data with a high paste requirement, the second apparatus may pre-synchronize the first data; or when the first data is data with a low paste requirement, the second apparatus may synchronize the first data upon detection of a data paste operation.

Optionally, the second apparatus may determine, based on a historical paste probability, whether there is a need to pre-synchronize the first data. For example, the second apparatus may determine a quantity of historically received broadcast messages for copied data and a quantity of times cross-device pasting succeeds, and determine the historical paste probability based on the quantity of historically received broadcast messages for copied data and the quantity of times cross-device pasting succeeds. If the historical paste probability is greater than or equal to a second threshold, it indicates that a paste requirement of the second apparatus is high, and the second apparatus may pre-synchronize the first data. If the historical paste probability is less than the second threshold, it indicates that the paste requirement of the second apparatus is low, and the second apparatus may not pre-synchronize the first data. If the second apparatus determines that there is no need to pre-synchronize the first data, the second apparatus may synchronize the first data upon detection of the data paste operation.

When determining that there is a need to synchronize the data, the second apparatus may obtain the first data from the first clipboard based on the first relative time information, and store the first data in the second clipboard.

Optionally, the second apparatus may further determine the data type information of the first data based on the feature description information in the first broadcast message, and determine a manner of synchronizing the first data. For example, if the feature description information in the first broadcast message indicates that the first data is the text data, the second apparatus may obtain the first data from the first clipboard, and store the first data in the second clipboard, to implement synchronization of the first data; or if the feature description information in the first broadcast message indicates that the first data is the URI, the second apparatus may obtain the URI from the first clipboard, and store the URI in the second clipboard.

If the first data is the URI, the second apparatus may obtain, based on the URI stored in the second clipboard, the media file from the first apparatus upon detection of the data paste operation. For example, the second apparatus may obtain the media file from the first apparatus based on the URI through a distributed file system, to implement cross-device copying and pasting of the media file. Optionally, a communication link via which the second apparatus obtains the media file from the first apparatus through the distributed file system may be a communication link through which the second apparatus obtains the URI from the first clipboard.

Optionally, the length of the content included in the first broadcast message may be related to a version of the first data stored in the first clipboard. For example, if the version of the first data stored in the first clipboard is a version 1, the length of the content included in the first broadcast message is 3 bytes; or if the version of the first data stored in the first clipboard is a version 2, the length of the content included in the first broadcast message is 4 bytes. In this case, multi-version compatibility processing is performed based on the length of the content included in the broadcast message, making it possible for the broadcast message not to carry a version number of the first data stored in the first clipboard and further reducing the length of the broadcast message. This helps increase the success rate of cross-device data synchronization.

In this embodiment of this application, the first apparatus and the second apparatus may provide cut, copy, and paste services externally through a clipboard service (for example, a service layer, of a driver framework, corresponding to a clipboard). Therefore, a process implemented by the first apparatus in this embodiment of this application may be understood as being implemented by the first apparatus through the clipboard service (for example, a first clipboard service), and a process implemented by the second apparatus in this embodiment of this application may be understood as being implemented by the second apparatus through the clipboard service (for example, a second clipboard service). S401 is used as an example. The first apparatus obtaining the first data in response to the copy operation may be understood as the first apparatus obtaining the first data through the first clipboard service in response to the copy operation.

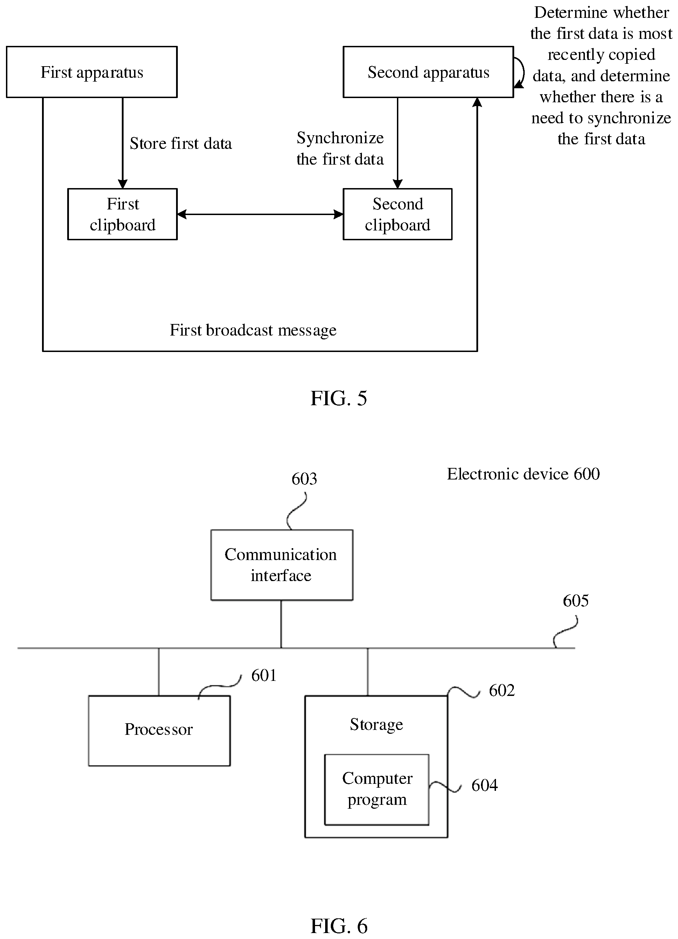

The following describes an embodiment with reference to FIG. 5. This embodiment is an example of the embodiment shown in FIG. 4. FIG. 5 is a flowchart of an example of the cross-device copying and pasting method according to the embodiment shown in FIG. 4.

After obtaining first data through a copy operation, the first apparatus may store the first data in a first clipboard, and send a first broadcast message. The first broadcast message may include, for example, first relative time and feature description information of the first data. For the first relative time, refer to the description of the first relative time in S402. For related descriptions of the feature description information of the first data, refer to the related descriptions of the feature description information of the first data in S403. Details are not described herein again.

After receiving the first broadcast message from the first apparatus, the second apparatus may determine, based on the first broadcast message, whether the first data is most recently copied data, and synchronize the first data from the first clipboard based on first time information when determining that the first data is the most recently copied data. For example, the second apparatus may determine, based on time at which the first broadcast message is received (namely, the foregoing second absolute time), whether the first data is the most recently copied data. For a specific determining process, refer to the related descriptions of the second apparatus determining, based on the second absolute time, whether the first data is the most recently copied data in S404. Details are not described herein again. Alternatively, the second apparatus may determine, based on the time at which the first broadcast message is received (namely, the second absolute time) and the first relative time included in the first broadcast message, whether the first data is the most recently copied data. For a specific determining process, refer to the related descriptions of the second apparatus determining the third absolute time based on the second absolute time and the first relative time and determining, based on the third absolute time, whether the first data is the most recently copied data in S404. Details are not described herein again.

Optionally, when determining that there is a need to pre-synchronize the first data or detecting a first operation of pasting data, the second apparatus may further synchronize the first data from the first apparatus based on the first relative time information, that is, obtain the first data from the first clipboard of the first apparatus based on the first relative time information, and store the first data in a second clipboard of the second apparatus. For a manner in which the second apparatus determines whether there is a need to pre-synchronize the first data, refer to the related descriptions of the second apparatus determining whether there is a need to pre-synchronize the first data in S404. Details are not described herein again.

Optionally, when the second apparatus detects the first operation of pasting data, if the first data is already stored in the second clipboard, and the first data is a URI, the second apparatus may further directly obtain a media file from the first apparatus based on the URI. For related descriptions of the second apparatus obtaining the media file from the first apparatus based on the URI, refer to the related descriptions of the second apparatus obtaining the media file from the first apparatus based on the URI in S404. Details are not described herein again.

In the foregoing technical solution, after obtaining the first data by performing the copy operation, the first apparatus does not need to store an event in the first clipboard or push (push)/pull (pull) the event to the second clipboard of the second apparatus. In other words, compared with the synchronization procedure shown in FIG. 3, this embodiment of this application eliminates an event synchronization procedure. In addition, a quantity of bytes occupied by the time carried in the first broadcast message is less than a quantity of bytes occupied by absolute time. As a result, a broadcast frame length of the broadcast message is reduced. This helps increase a success rate of cross-device copying and pasting.

The following describes a diagram of a structure of an electronic device according to an embodiment of this application. Refer to FIG. 6. The electronic device 600 may be the first apparatus or the second apparatus described in the foregoing. The electronic device 600 may include one or more processors 601, one or more storages 602, a communication interface 603, and one or more computer programs 604. The foregoing components may be connected through one or more communication buses 605. The one or more computer programs 604 are stored in the storage 602 and are configured to be executed by the one or more processors 601, and the one or more computer programs 604 include instructions. For example, the foregoing instructions may be used to perform related steps of the electronic device in the foregoing corresponding embodiments. The communication interface 603 is configured to implement communication between the electronic device and another device (for example, an uncrewed aerial vehicle). For example, the communication interface may be a transceiver.

An embodiment of this application further provides a computer program product, including a computer program. When the computer program is run on a computer, the computer is enabled to perform the method according to the foregoing embodiments.

An embodiment of this application further provides a graphical user interface on an electronic device. The electronic device has a display, a storage, and a processor. The processor is configured to execute one or more computer programs stored in the storage. The graphical user interface includes a graphical user interface displayed when the electronic device performs the method according to the foregoing embodiments.

An embodiment of this application further provides a chip system, including a processor and an interface. The processor is configured to invoke instructions through the interface and run the instructions, to enable the chip system to implement the method according to the foregoing embodiments.

In the foregoing embodiments provided in this application, the method provided in embodiments of this application is described from a perspective of an electronic device (the first apparatus or the second apparatus) as an execution body. To implement functions in the foregoing method provided in embodiments of this application, the electronic device may include a hardware structure and/or a software module, and the foregoing functions are implemented in a form of hardware structure, software module, or combination of a hardware structure and a software module. Whether a function in the foregoing functions is performed by using the hardware structure, the software module, or the combination of the hardware structure and the software module depends on particular applications and design constraints of the technical solutions.

As used in the foregoing embodiments, according to the context, the term "when" may be interpreted as a meaning of "if" or "after". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or a part of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer instructions are loaded and executed on a computer, the procedure or functions according to embodiments of this application are all or partially generated. The computer may be a generalpurpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

For a purpose of explanation, the foregoing description is described with reference to a specific embodiment. However, the foregoing example discussion is not intended to be detailed, and is not intended to limit this application to a disclosed precise form. Based on the foregoing teaching content, many modification forms and variation forms are possible. Embodiments are selected and described to fully illustrate the principles of this application and practical application of the principles, so that other persons skilled in the art can make full use of this application and various embodiments that have various modifications applicable to conceived specific usage.

**Claims**

1. A communication method, applied to a system comprising a first apparatus and a second apparatus, wherein the method comprises:

   sending, by the first apparatus, a first broadcast message, wherein the first broadcast message indicates to synchronize first data, the first broadcast message comprises first relative time, and the first relative time indicates time at which the first apparatus obtains the first data through copying; and
   after receiving the first broadcast message, synchronizing, by the second apparatus, the first data from the first apparatus based on the first relative time.

2. The method according to claim 1, wherein before sending, by the first apparatus, the first broadcast message, the method further comprises:
   determining, by the first apparatus, the first relative time based on first absolute time, wherein the first absolute time is time at which the first apparatus obtains the first data through copying, and a quantity of bytes occupied by the first relative time is less than a quantity of bytes occupied by the first absolute time.

3. The method according to claim 2, wherein determining, by the first apparatus, the first relative time based on the first absolute time comprises:

   determining, by the first apparatus, a second parameter and a first remainder based on the first absolute time and a first parameter, wherein the first parameter indicates an expected error; and
   if the first remainder is less than a first threshold, determining, by the first apparatus, the first relative time based on the second parameter, wherein the first threshold is related to the first parameter; or
   if the first remainder is greater than or equal to the first threshold, updating, by the first apparatus, the second parameter, and determining the first relative time based on the updated second parameter.

4. The method according to any one of claims 1 to 3, wherein the method further comprises:

   determining, by the second apparatus based on the first relative time and second absolute time, whether the first data is most recently copied data; or determining, by the second apparatus based on the second absolute time, whether the first data is the most recently copied data, wherein the second absolute time is time at which the second apparatus receives the first broadcast message; and
   if the first data is the most recently copied data, determining, by the second apparatus, to synchronize the first data.

5. The method according to claim 4, wherein determining, by the second apparatus based on the first relative time and the second absolute time, whether the first data is the most recently copied data comprises:

   determining, by the second apparatus, second relative time based on the second absolute time;
   determining, by the second apparatus, third absolute time based on the first relative time, the second relative time, and the second absolute time, wherein the third absolute time is time at which the first apparatus copies the first data and that is determined by the second apparatus; and
   determining, by the second apparatus based on the third absolute time, whether the first data is the most recently copied data.

6. The method according to any one of claims 1 to 5, wherein synchronizing the first data from the first apparatus based on the first relative time comprises:
   when a historical paste probability of the second apparatus is greater than or equal to a second threshold, obtaining the first data from a first clipboard of the first apparatus based on the first relative time, and storing the first data in a second clipboard of the second apparatus, wherein the second threshold indicates a minimum paste requirement.

7. The method according to any one of claims 1 to 6, wherein synchronizing the first data from the first apparatus based on the first relative time comprises:
when the historical paste probability of the second apparatus is less than the second threshold and in response to a data paste operation, obtaining the first data from the first clipboard of the first apparatus based on the first relative time, and storing the first data in the second clipboard of the second apparatus.

8. The method according to any one of claims 1 to 7, wherein a broadcast frame length of the first broadcast message is related to a version number of the first data stored in the first clipboard of the first apparatus.

9. A cross-device data synchronization method, applied to a first apparatus, wherein the method comprises:
sending a first broadcast message, wherein the first broadcast message indicates to synchronize first data, the first broadcast message comprises first relative time, and the first relative time indicates time at which the first apparatus obtains the first data through copying.

10. The method according to claim 9, wherein before sending the first broadcast message, the method further comprises:
determining the first relative time based on first absolute time, wherein the first absolute time is time at which the first apparatus copies the first data, and a quantity of bytes occupied by the first relative time is less than a quantity of bytes occupied by the first absolute time.

11. The method according to claim 10, wherein determining the first relative time based on the first absolute time comprises:

determining a second parameter and a first remainder based on the first absolute time and a first parameter, wherein the first parameter indicates an expected error; and
if the first remainder is less than a first threshold, determining, by the first apparatus, the first relative time based on the second parameter, wherein the first threshold is related to the first parameter; or
if the first remainder is greater than or equal to the first threshold, updating the second parameter, and determining the first relative time based on the updated second parameter.

12. The method according to any one of claims 9 to 11, wherein a broadcast frame length of the first broadcast message is related to a version number of the first data stored in a first clipboard.

13. A cross-device data synchronization method, applied to a second apparatus, wherein the method comprises:

receiving a first broadcast message, wherein the first broadcast message indicates to synchronize first data, the first broadcast message comprises first relative time, and the first relative time indicates time at which the first apparatus obtains the first data through copying; and
synchronizing the first data from the first apparatus based on the first relative time.

14. The method according to claim 13, wherein synchronizing the first data from the first apparatus based on the first relative time comprises:
when a historical paste probability of the second apparatus is greater than or equal to a second threshold, obtaining the first data from a first clipboard of the first apparatus based on the first relative time, and storing the first data in a second clipboard of the second apparatus, wherein the second threshold indicates a minimum paste requirement.

15. The method according to claim 13 or 14, wherein synchronizing the first data from the first apparatus based on the first relative time comprises:
when the historical paste probability of the second apparatus is less than the second threshold and in response to a data paste operation, obtaining the first data from the first clipboard of the first apparatus based on the first relative time, and storing the first data in the second clipboard of the second apparatus.

16. The method according to any one of claims 13 to 15, wherein the method further comprises:

determining, based on the first relative time and second absolute time, whether the first data is most recently copied data; or determining, based on the second absolute time, whether the first data is the most recently copied data, wherein the second absolute time is time at which the second apparatus receives the first broadcast message; and
if the first data is the most recently copied data, determining to synchronize the first data.

17. The method according to claim 16, wherein determining, based on the first relative time and the second absolute time, whether the first data is the most recently copied data comprises:

> determining second relative time based on the second absolute time;
> determining third absolute time based on the first relative time, the second relative time, and the second absolute time, wherein the third absolute time is time at which the first apparatus copies the first data and that is determined by the second apparatus; and
> determining, based on the third absolute time, whether the first data is the most recently copied data.

18. An electronic device, comprising:

> a processor, a storage, and one or more programs, wherein
> the one or more programs are stored in the storage, the one or more programs comprise instructions, and when the instructions are executed by the processor, the electronic device is enabled to perform steps of the method according to any one of claims 9 to 17.

19. A computer-readable storage medium, wherein the computer-readable storage medium is configured to store a computer program, and when the computer program is run on a computer, the computer is enabled to perform the method according to any one of claims 9 to 17.

20. A computer program product, wherein the computer program product comprises a computer program, and when the computer program is run on a computer, the computer is enabled to perform the method according to any one of claims 9 to 17.

Mobile phone 100

FIG. 1A

| Application layer | Camera | Calendar | Maps | WLAN | Music | Messaging |
|---|---|---|---|---|---|---|
| | Gallery | Call | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | | Android runtime |
|---|---|---|---|---|
| | Two-dimensional graphics engine | Media library | Image processing library | ... |

| Kernel layer | Display driver | Camera driver | |
|---|---|---|---|
| | Audio driver | Sensor driver | ... |

FIG. 1B

| Dedicated hardware | ... |
| | Head unit dedicated hardware service |

Driver

| Hardware service subsystem set | Power supply service |
| | Biometric recognition service |
| | Location service |
| | USB service |
| | Pan-sensor service |

Hardware abstraction layer

HarmonyOS driver framework

LiteOS

| Enhanced software | ... |
| | Head unit service software service |

| Basic software service subsystem set | ... |
| | Distributed DFX software service |
| | Phone software service |
| | Event and notification software service |
| | MSDP&DV software service |
| | Multimodal input software service |
| | Distributed media software service |
| | Graphics and image software service |

Kernel abstraction layer

HarmonyOS microkernel

Distributed security and privacy protection

| Basic system capability subsystem set | User program framework | Meta-capability framework | Ark runtime |
| | | | Distributed task scheduler | Distributed storage and data management | Distributed soft bus |

Linux kernel

Extended application/ Third-party application

System application

Application layer

Framework layer

Basic system service layer

Kernel layer

FIG. 1C

Mobile phone 1

Mobile phone 2

Broadcast
message

Copy   Forward

Paste

Captured at xx Lake during travel

"Captured at xx Lake during travel"

FIG. 2

Mobile phone 1

Mobile phone 2

Store data and
an event

Synchronize
the data

Event pre-
synchronization

KV storage-1

Event synchronization

KV storage-2

Copy information

FIG. 3

First
apparatus

Second
apparatus

S401: Obtain first data in response
to a copy operation, and store the
first data in a first clipboard

S402: Determine first absolute time
at which the first data is obtained
through copying, and determine first
relative time based on the first
absolute time

S403: Send a first broadcast message

S404: Synchronize the first data
from the first apparatus based on the
first relative time

FIG. 4

Determine whether
the first data is most
recently copied
data, and determine
whether there is a
need to synchronize
the first data

First apparatus

Second apparatus

Store first data

Synchronize
the first data

First
clipboard

Second
clipboard

First broadcast message

FIG. 5

603

Electronic device 600

Communication
interface

605

Processor

601

Storage

602

Computer
program

604

FIG. 6

## INTERNATIONAL SEARCH REPORT

International application No.

**PCT/CN2024/143387**

| A. | CLASSIFICATION OF SUBJECT MATTER |
| --- | --- |

G06F9/54(2006.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 跨设备, 设备之间, 设备间, 复制, 粘贴, 剪切, 剪贴, 相对时间, 字节, 广播, 时间戳, between devices, copy, paste, cut, clipboard, pasteboard, relative time, byte, broadcast, timestamp

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109644201 A (APPLE INC.) 16 April 2019 (2019-04-16)<br>description, paragraphs [0004]-[0005] and [0015]-[0053], and figures 1-8 | 1, 4, 6-9, 12-16, 18-20 |
| A | US 2016342449 A1 (MICROSOFT TECHNOLOGY LICENSING, LLC) 24 November 2016 (2016-11-24)<br>entire document | 1-20 |
| A | US 2015207850 A1 (GOOGLE INC.) 23 July 2015 (2015-07-23)<br>entire document | 1-20 |
| A | US 2018335998 A1 (MICROSOFT TECHNOLOGY LICENSING, LLC) 22 November 2018 (2018-11-22)<br>entire document | 1-20 |
| A | US 10015230 B1 (BUERGI, Robert) 03 July 2018 (2018-07-03)<br>entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 April 2025** | **11 April 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/143387**

| Patent document cited in search report | | | Publication date (day/month/year) | Patent family member(s) | | | Publication date (day/month/year) |
|---|---|---|---|---|---|---|---|
| CN | 109644201 | A | 16 April 2019 | AU | 2020203815 | A1 | 02 July 2020 |
| | | | | AU | 2020203815 | B2 | 27 May 2021 |
| | | | | US | 2017347227 | A1 | 30 November 2017 |
| | | | | US | 9967697 | B2 | 08 May 2018 |
| | | | | AU | 2017275461 | A1 | 22 November 2018 |
| | | | | AU | 2017275461 | B2 | 16 April 2020 |
| | | | | EP | 4161035 | A1 | 05 April 2023 |
| | | | | US | 2020162876 | A1 | 21 May 2020 |
| | | | | US | 10863338 | B2 | 08 December 2020 |
| | | | | WO | 2017210062 | A1 | 07 December 2017 |
| | | | | KR | 20190002575 | A | 08 January 2019 |
| | | | | KR | 102192701 | B1 | 17 December 2020 |
| | | | | US | 2019335306 | A1 | 31 October 2019 |
| | | | | US | 2017347226 | A1 | 30 November 2017 |
| | | | | KR | 20200142116 | A | 21 December 2020 |
| | | | | KR | 102405113 | B1 | 02 June 2022 |
| | | | | EP | 3437307 | A1 | 06 February 2019 |
| | | | | EP | 3437307 | B1 | 21 December 2022 |
| US | 2016342449 | A1 | 24 November 2016 | None | | | |
| US | 2015207850 | A1 | 23 July 2015 | US | 9325775 | B2 | 26 April 2016 |
| US | 2018335998 | A1 | 22 November 2018 | None | | | |
| US | 10015230 | B1 | 03 July 2018 | US | 11736557 | B1 | 22 August 2023 |
| | | | | US | 10630761 | B1 | 21 April 2020 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410808050